# EUROPEAN PATENT SPECIFICATION

(11) **EP 4 049 937 B1**
(45) Date of publication and mention of the grant of the patent: **28.01.2026**
(21) Application number: 21382153.1
(22) Date of filing: 24.02.2021
(51) Int. Cl.: B65B 51/14, B65B 7/16, B65B 65/02, B29C 65/00, B65B 31/02, B29C 65/02, B29C 65/78

(54) **SEALING STATION WITH LIFTING SYSTEM**
ABDICHTSTATION MIT HUBSYSTEM
STATION D'ÉTANCHÉITÉ AVEC SYSTÈME DE LEVAGE

(43) Date of publication of application: 31.08.2022
(73) Proprietor: MULTIVAC Sepp Haggenmüller SE & Co. KG, 87787 Wolfertschwenden (DE)
(72) Inventor: Jiménez Aparicio, David, 08397 Pineda de Mar (ES)
(74) Representative: Grünecker Patent- und Rechtsanwälte PartG mbB

(56) References cited:
- EP-A1- 3 130 546
- EP-A1- 3 715 267
- EP-B1- 3 235 741
- WO-A1-2018/193383
- NL-A- 9 202 176
- US-A1- 2006 048 480
- US-A1- 2012 204 516

## Description

The present invention refers to a sealing station with a lifting system according to claim 1. In addition, the present invention refers to a method for moving a lower tool of a sealing station between an open position and a closed position according to claim 12.

EP 2 179 927 A2 discloses a tray sealer with a sealing station comprising a lower tool, which can be moved between an open position and a closed position by a lifting system. Inside the lower tool a supporting disc device is mounted which moves between a first position, where trays can be placed onto the supporting disc device while the lower tool is in the open position, and a second position, in which the supporting disc device is lowered compared to the first position. In the second position, the supporting disc device is away from the bottoms of the trays when the lower tool is in the closed position for the sealing process.

For moving the known lower tool between the open position and the closed position as well as the known supporting disc device between the first position and the second position, the lower tool of the sealing station has to be designed with a huge capacity height. Thus, the overall volume of the lower tool rises and therefore an evacuation time rises for evacuating the sealing tool in order to produce a predetermined atmosphere rises as well. This, however, makes the tray sealer less competitive. Furthermore, due to the relatively huge size of the lower tool manufacturing costs are likely to increase.

Other known tray sealers provide a lower tool for the sealing station with a static supporting disc device. The lower tool, when it moves into the closed position, receives the trays at their outer flanges and lifts them up, i.e. away from such static supporting disc device in order to bring them into a sealing position. However, in this case too, especially when the trays have a big height, the lower tool, especially the thereat foreseen tray reception mold, has to be designed with a great height, thus having a relatively huge volume capacity. Consequently, even here the above-mentioned disadvantages occur.

WO 2018/193383 A1 discloses a lower sealing tool with an insert for supporting a tray, wherein the insert can be moved from a first position for a vacuum process into a higher, second position for a sealing process.

US 2006/048480 A1 discloses a lower sealing tool with a deck plate for supporting a bottom of a thereon positioned tray, wherein the deck plate can be lifted by a touching base.

US 2012/204516 A1 discloses a lower sealing tool and a therein disposed adapter which can be lifted when the lower sealing tool is moved upwards for a sealing process.

NL 9 202 176 A discloses a tray sealer with a lower sealing tool and a therein disposed supporting disc device for supporting trays.

In view of the above discussed disadvantages in connection with the prior art, it is the object of the present invention to provide a sealing station, which enables operating in shorter and more efficient vacuum process cycles for vacuuming the therein disposed trays, and therefore becoming more competitive with respect to known technical approaches. Also, a method for enabling such object should be provided.

The above-mentioned object can be solved by a sealing station according to claim 1. In addition, the above object can be solved by a method according to claim 12.

The technical features of the dependent claims provide improved embodiments of the present invention.

The present invention refers to a sealing station for a packaging machine. The packaging machine can be a tray sealer. The inventive sealing station comprises a lifting system and a lower tool that can be lifted by the lifting system between an open position and a closed position. The lower tool comprising a tray reception mold and a supporting disc device for positioning the trays, wherein the supporting disc device can be moved between a first position in which the trays are placed thereon and a second position in which the supporting disc device is positioned for a sealing process.

According to the present invention, by being located in the second position, the supporting disc device is located at a higher level compared to the supporting disc device being located in the first position.

Therefore, in contrast to the known practice, the inventive supporting disc device moves from the first position, which it has initially for receiving trays, upwards into the second position in that the trays can be positioned for the sealing process.

By moving the supporting disc device from the first position into the second, higher level position, it is possible to design the tray reception mold of the lower tool with a smaller capacity height. As a result, this allows a design having a smaller capacity volume, thus shorter process cycles, such as vacuuming the trays before the sealing process. In other words, by moving the supporting disc device from the first position into the second position in a direction that correlates with the movement of the tray reception mold for moving the trays upwards into the sealing position, it is possible to design the lower tool of the sealing station in a compact manner. Consequently, enabling the positive effect of shorter process times. In addition, manufacturing costs for the lower tool of the sealing station can be reduced.

Preferably, the supporting disc device can be lifted together with the tray reception mold in a common direction along a predetermined section of a lifting stroke. Here, the supporting disc device becomes a lift by the tray reception mold that is moving into the sealing position. Typically, based on the common upwards movement that is conducted by the supporting disc device and the tray reception mold, the height of the tray reception mold can be reduced.

One preferred embodiment provides that the supporting disc device is at least partially accommodated within a capacity volume formed by the tray reception mold, said capacity volume comprises a capacity height being smaller than a total lifting stroke of the lower tool by moving between the open position and the closed position.

It is conceivable that the total lifting stroke measures about 200 millimeters, wherein the capacity height of the tray reception mold measures about 140 millimeters so that there would be an interference of about 60 millimeters, which defines the lifting section along which the supporting disc device is lifted by the tray reception mold.

The invention provides that the lower tool comprises at least one spring unit for mounting the supporting disc device. According to the invention, the spring unit is held at the lower tool in an unloaded state when the supporting disc device being in the first position and the spring unit is held in a loaded state when the supporting disc device being located in the second position, respectively.

Preferably, the spring unit comprises at least one spring with a predetermined spring stroke of about 50 millimeters to 70 millimeters. At the lower tool, the spring's stroke defines the operable movement of the supporting disc device between the first position and the second position.

According to an improved embodiment, in the closed position of the lower tool, the spring unit presses the supporting disc device with a maximal spring force against a bottom of the tray reception mold. Thereby, a joint between them is maximally sealed and therefore improving the formation of a closed vacuum chamber, thus making that the vacuum cycle highly efficient.

Preferably, the lifting system comprises a stationary basis and a thereat mounted drive unit for the lower tool, wherein the supporting disc device when being located in the second position is more distanced from the stationary basis compared to the supporting disc device being located in the first position. The stationary basis provides a solid platform for carrying the drive unit as well as supporting the complete lower tool of the sealing station.

The stationary basis may comprise a beam that is formed for mounting at the machine frame. It would be conceivable that the stationary basis comprises two beams that are built together. Ideally, the stationary basis carries the spring unit in an integral manner, such that the spring unit is completely accommodated within a constructed size of the stationary basis. Thereby, the compact, integrated design of the lifting station is improved.

It is conceivable that the drive unit is used for moving sectionwise both, the tray reception mold coupled with the supporting disc device. Here, by actuating the drive unit, the tray reception mold is moved upwards and downwards, wherein by the upward movement, the tray reception mold may contact with the supporting disc device and lift it by continuing the upward movement from its first position into its second, higher level position. Accordingly, the drive unit initially lifts the tray reception mold towards the supporting disc device waiting in the first position, wherein once the tray reception mold is docked at the supporting disc device; both are lifted upwards by the drive unit until the tray reception mold reaches the closed position for the sealing process. Once the sealing process is completed, the drive unit lowers the tray reception mold, while the supporting disc device sitting thereon is concurrently lowered from its second position into the first position. When the supporting disc device arrives the first initial position, the supporting disc device is left there behind while the drive unit continues to lower the tray reception mold into the open position.

It is a preferred variant that the drive unit is a servomotor that is fixed at a lateral side of the stationary basis. The servomotor enables a very precise lifting and lowering movement of the lower tool and can be mounted in a compact manner at the sealing station.

Preferably, the lifting system comprises a lifting mechanism with at least two vertically slidable lifting shafts. The lifting mechanism preferably comprises a crank mechanism that connects the drive unit with the vertically slidable lifting shafts. The crank mechanism can be built on two lateral sides of the stationary basis.

A purposeful embodiment provides that the lifting shafts are mounted onto a height adjustable cross base with their lower ends. The height adjustable cross base can be formed as a plate and therefore provides a robust carrier for the lower ends of the lifting shafts. Also, movement of the cross base can be actuated by the drive unit via the crank mechanism. For a compact design, the height adjustable cross base can be positioned below the stationary basis.

One variant provides that the supporting disc device comprises at least two guiding shafts, which seen in a vertical projection plane, are mounted between the lifting shafts. This improves a precise guiding of the supporting disc device during the lifting stroke of the lower tool.

It is conceivable that the guide shafts can dock with their lower ends at a side of the cross base facing the lower ends. Such docking can occur at that time when the tray reception mold reaches into contact with the supporting disc device for lifting the latter from its first position into the second, higher level position. By such at least time wise connection between the lower ends of the guide shafts and the cross base, guiding of the supporting disc device in a long-term precise manner can be better guaranteed.

The present invention further refers to a method for moving a lower tool of a sealing station between an open position and a closed position, wherein in the open position of the lower tool, trays are placed on a supporting disc device of the lower tool, and wherein, in the closed position of the lower tool, the trays are sealed.

According to the inventive method, the supporting disc device is moved for the sealing process from a first position in which the trays are positioned on the supporting disc device into a second, higher level position as compared to the first position. Said movement of the supporting disc device enables a reduced-height design for the lower tool, especially a tray reception mold of the lower tool, and therefore, provides the possibility of shorter process cycles, e.g. a shorter vacuum cycle before sealing. Because the overall volume capacity of the lower tool can be reduced, there is the possibility of reducing manufacturing costs of the lower tool, too. Thus, rendering the sealing station used for the inventive method more competitive.

Preferably, the supporting disc device is lifted with a height-adjustable tray reception mold that comes into contact from below with the supporting disc device thus moving it form the first position into the second position. Therefore, during the movement between the first position and the second position, the tray reception mold and the thereby lifted supporting disc device contact and move together in the same direction along a common section of the lifting stroke. The length of such section provides the potential of reducing the construction height of the lower tool.

The invention provides that the supporting disc device is lifted against a spring force of a spring unit from the first position to the second position. Especially, being located in the second position, the spring unit may act with a maximum spring force that presses the supporting disc device against a bottom of the tray reception mold, thus establishing a sufficient sealing for forming the vacuum chamber for the vacuum process.

Advantageous embodiments of the invention are explained in more detail by means of the following drawings:
- Fig. 1: shows a perspective view of a tray sealer,
- Fig. 2A: shows a lower tool of a sealing station in an open position,
- Fig. 2B: shows the lower tool of Fig. 2A in a closed position,
- Fig. 3A: shows a sectional view of Fig. 2A,
- Fig. 3B: shows a sectional view of Fig. 2A,
- Figs. 4A-4C: show a total lifting stroke of the lower tool, and
- Fig. 5: shows schematically a method for lifting and lowering a lower tool between an open and closed position.

Identical components are consistently marked with identical reference numerals in the figures.

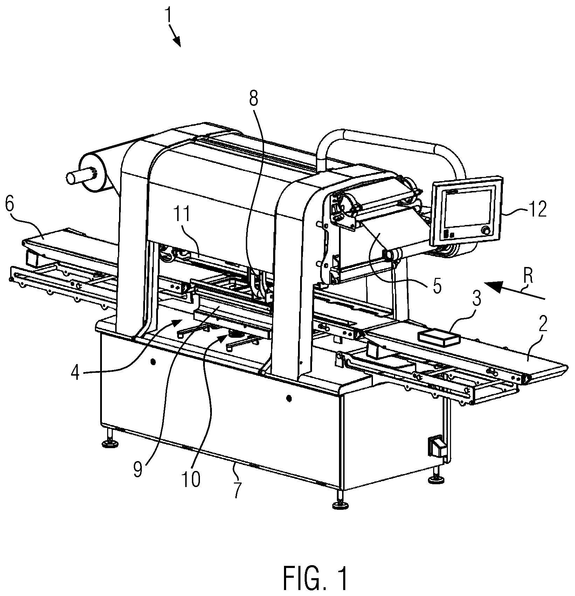

Fig. 1 shows a tray sealer 1 comprising a first conveyer 2 for providing unsealed trays 3, a sealing station 4 for sealing the trays 3 with a lid foil 5, and further comprising a second conveyer 6 for moving the sealed trays 3 away from the sealing station 4 for further handling. The first conveyer 2, the sealing station 4, and the second conveyer 6 are arranged along a transport direction R and are mounted onto a machine frame 7 of the tray sealer 1.

The trays 3 which are provided onto the first conveyer 2 can be picked up by a gripper 8 and can be transported into the sealing station 4 for a sealing process. In the sealing station 4, the trays 3 are received in a lower tool 9, which can be lifted vertically upwards by a lifting system 10 towards an upper tool 11 of the sealing station 4, thereby, forming a closed sealing chamber for a vacuum process and/or a gassing process as well as sealing with the lid foil 5. Fig. 1 further shows that the tray sealer 1 provides a user control interface 12 for controlling the packaging process and observing the same.

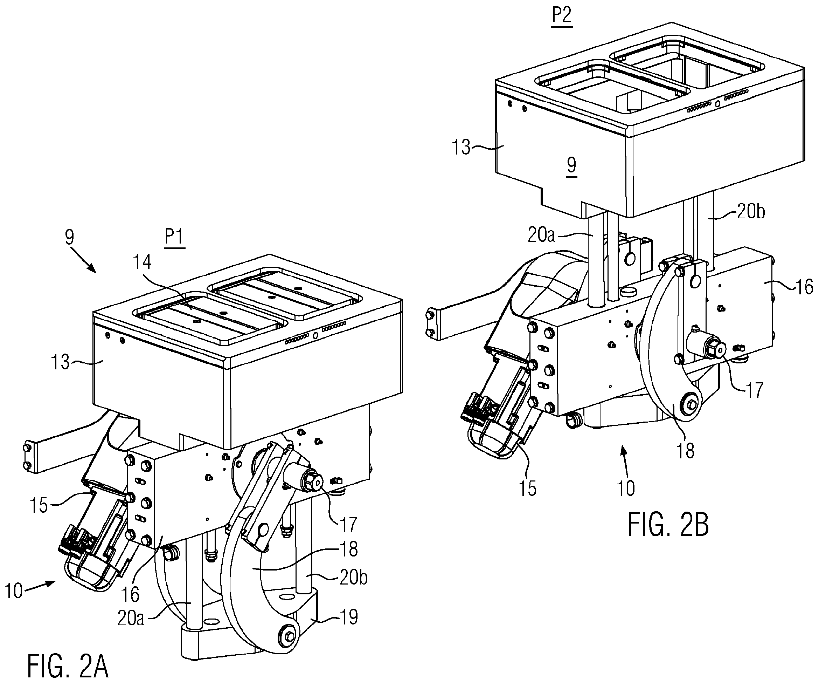

Fig. 2A shows the lower tool 9 of the sealing station 4 in an isolated manner being located in an open position P1. In the open position P1, the lower tool 9 may receive trays 3 for the sealing process onto a supporting disc device 14, which is positioned inside a tray reception mold 13.

Further, Fig. 2A shows that the lifting system 10 provides a drive unit 15, which is used for moving the lower tool 9 from the first position P1 into a second position P2, shown in Fig. 2B. The drive unit 15 is a servomotor that is mounted at a lateral side of a stationary basis 16. The latter can be mounted at the machine frame 7 shown in Fig. 1 or being formed as an integrally part thereof.

As shown by Fig. 2A the drive unit 15 comprises a rotatable drive shaft 17, which is supported through the stationary basis 16 horizontally. The rotationally mounted drive shafts 17 is connected on both lateral sides of the stationary basis 16 with a crank mechanism 18, which is configured for lifting a cross base 19 upwards and downwards below the cross base 19. The cross base 19 carries two lifting shafts 20a, 20b at their lower ends. At their upper ends, the lifting shafts 20a, 20b are mounted at a bottom of the tray reception mold 13 as illustrated in Fig. 2B.

In Fig. 2A, by actuating the drive unit 15, the drive shaft 17 rotates the crank mechanism 18 thereby lifting the thereat mounted cross base 19 and the thereon mounted lifting shafts 20a, 20b, thus the tray reception mold 13 is moved from the open position P1 into the closed position P2 illustrated in Fig. 2B.

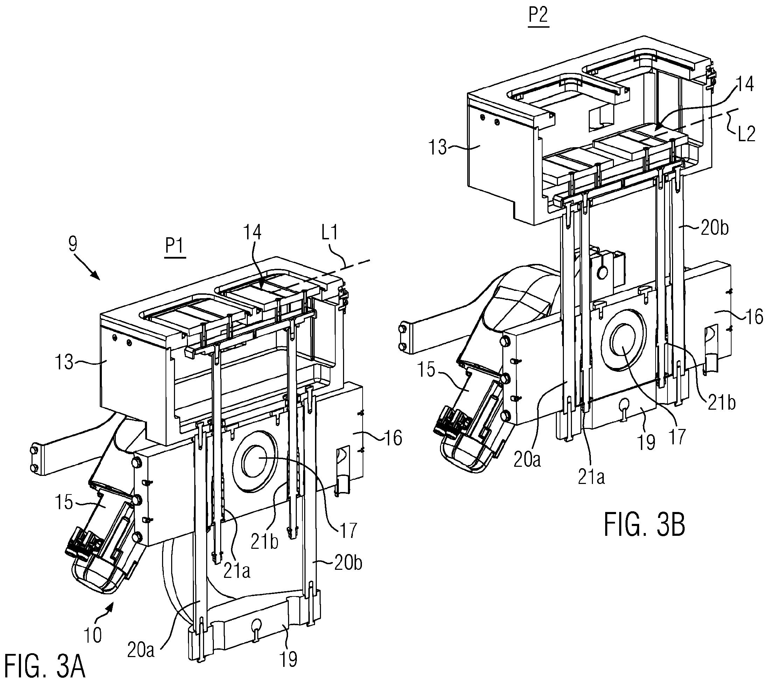

The sectional view of Fig. 3A illustrates that the lifting system 10 provides spring units 21a, 21b for mounting the supporting disc device 14 at the stationary basis 16. The spring units 21a, 21b are shown in Fig. 3A in an unloaded condition, as the supporting disc device 14 is located in a first position L1 in which the trays 3 are placed thereon.

Fig. 3B shows the spring units 21a, 21b in a loaded condition wherein the supporting disc device 14 is shifted into a second position L2. In the second position L2, the supporting disc device 14 is located at a higher level compared to the supporting disc device 14 being located in the first position L1.

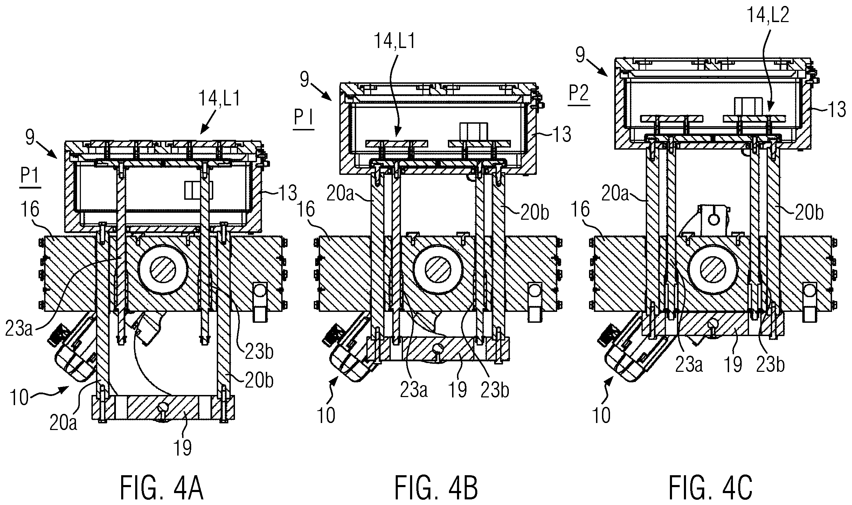

Figs. 4A to 4C show a lifting stroke of the lower tool 9 between the open position P1 and the closed position P2. Between the open position P1 and the closed position P2 of the lifting stroke, an intermediate position PI is shown by Fig. 4B. In the intermediate position PI, the supporting disc device 14 is still located in the first position L1, wherein the supporting disc device 14 is now in contact with a bottom 22 of the tray reception mold 13.

From the intermediate position PI, the tray reception mold 13 and the supporting disc device 14 move together upwards into the arrangement as shown by Fig. 4C. In Fig. 4C, the lower tool 9 is located in the closed position P2 and the supporting disc device 14 is located in the second position L2, thus being positioned higher as compared to the first position L1 shown by Fig. 4A and Fig. 4B.

Figs. 4A to 4C also show that the supporting disc device 14 comprises guiding shafts 23a, 23b, which are located between the lifting shafts 20a, 20b. Fig. 4B shows that the guiding shafts 23a, 23b reach the cross base 19, potentially docking thereat, thus enabling a robust guiding assembly that moves the supporting disc device 14 from the first position L1 as shown in Fig. 4B, into the second position L2 as shown in Fig. 4C.

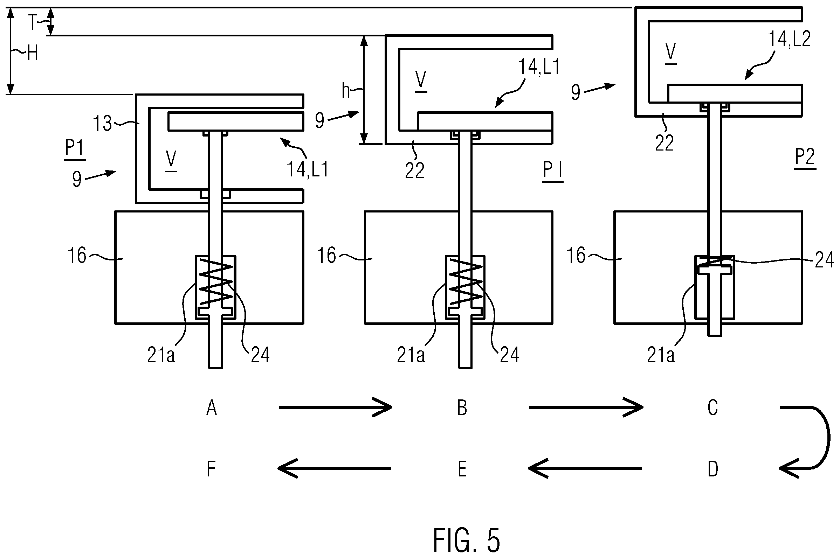

Fig. 5 shows schematically method steps for lifting the lower tool 9 from the open position P1 via the intermediate position PI into the closed position P2.

In Step A upward movement begins.

In Step B that the tray reception mold 13 contacts the supporting disc device 14 and at this point, the supporting disc device 14 begins to be pushed upwards. Thereby, the supporting disc device 14 is moved from the first position L1, shown in connection method step B, into the higher second position L2, shown in the method step C. Moving the supporting disc device 14 between the steps B and C results in the spring unit 21a being loaded.

Method step C shows the tray reception mold 13 at a top point of a total stroke H, which comprises 200 millimeters according to Fig. 5. The lower tool 9 is now in the closed position P2 while the supporting disc device 14 being moved into the second higher position L2. Thus, lifting the trays 3 that are held inside the tray reception mold 13 for a sealing process. At this stage, a spring 23 of the spring unit 21a maximally acts and therefore, the supporting disc device 14 is maximally pressed against the bottom 22 of the tray reception mold 13, thus ensuring a hermetically closed volume V.

In step D, the trays 3 are sealed and the overall system begins downward movement. The supporting disc device 14 goes down due to gravity and the spring force, which help to increase its descent acceleration and thus, avoid impacting the tray reception mold 13.

In step E, the supporting disc device 14 arrives in its initial first position L1.

In step F, the whole lifting system 10 returns to the initial position, thus placing the lower tool 9 in the open position P1 again.

## Claims

1. Sealing station (4) for a packaging machine, wherein the sealing station (4) comprises a lifting system (10) and a lower tool (9) that can be lifted by the lifting system (10) between an open position (P1) and a closed position (P2), the lower tool (9) comprising a tray reception mold (13) and a supporting disc device (14) for positioning trays (3), wherein the supporting disc device (14) can be moved between a first position (L1) in which the trays (3) are placed thereon, and a second position (L2) in which the supporting disc device (14) is positioned for a sealing process, wherein when located in the second position (L2), the supporting disc device (14) is located at a higher level compared to the supporting disc device (14) being located in the first position (L1), wherein the lifting system (10) comprises at least one spring unit (21a, 21b) for mounting the supporting disc device (14),
**characterized in that**
the spring unit (21a, 21b) is held at the lower tool (9) in an unloaded state when the supporting disc device (14) being in the first position (L1) and the spring unit (21a, 21b) is held in a loaded state when the supporting disc device (14) being located in the second position (L2), respectively.

2. Sealing station according to claim 1, **characterized in that** the supporting disc device (14) is liftable together with the tray reception mold (13) in a common direction along a predetermined section (T) of a lifting stoke (H).

3. Sealing station according to claim 1 or claim 2, **characterized in that** the supporting disc device (14) is at least partially accommodated within a capacity volume (V) formed by the tray reception mold (13), said capacity volume (V) comprises a capacity height (h) being smaller than a total lifting stroke (H) of the lower tool (9) by moving between the open position (P1) and the closed position (P2).

4. Sealing station according to one of the preceding claims, **characterized in that** the spring unit (21a, 21b) comprises at least one spring (24) with a spring stroke of about 50 millimeters to 70 millimeters.

5. Sealing station according to one of the preceding claims, **characterized in that** in the closed position (P2) of the lower tool (9) the spring unit (21a, 21b) is configured to press the supporting disc device (14) with a maximal spring force against a bottom (22) of the tray reception mold (13).

6. Sealing station according to one of the previous claims, **characterized in that** the lifting system (10) comprises a stationary basis (16) and a thereat mounted drive unit (15) for the lower tool (9), wherein the supporting disc device (14) being located in the second position (L2) is more distanced from the stationary basis (16) compared to the supporting disc device (14) being located in the first position (L1).

7. Sealing station according to claim 6, **characterized in that** the drive unit (15) is used for moving the tray reception mold (13) and the supporting disc device (14).

8. Sealing station according to one of the previous claims, **characterized in that** the lifting system (10) comprises a lifting mechanism with at least two vertically slidable lifting shafts (20a, 20b).

9. Sealing station according to claim 8, **characterized in that** the lifting shafts (20a, 20b) are mounted onto a height-adjustable cross base (19) with their lower ends.

10. Sealing station according to claim 8 or claim 9, **characterized in that** the supporting disc device (14) comprises at least two guiding shafts (23a, 23b), which, seen in a vertical projection plane, are mounted between the lifting shafts (20a, 20b).

11. Sealing station according to claim 10, **characterized in that** the guide shafts (23a, 23b) can dock with their lower ends at a side of the cross base (19) facing the lower ends.

12. Method for moving a lower tool (9) of a sealing station (4) between an open position (P1) and a closed position (P2), wherein, in the open position (P1) of the lower tool (9), trays (3) are placed on a supporting disc device (14) of the lower tool (9) and wherein, in the closed position (P2) of the lower tool (9), the trays (3) are sealed, wherein the supporting disc device (14) is moved for a sealing process from a first position (L1) in which the trays (3) are positioned on the supporting disc device (14) into a second, higher level position (L2) as compared to the first position (L1), **characterized in that** the supporting disc device (14) is moved against a spring force of a spring unit (21a, 21b) from the first position (L1) into the second position (L2).

13. Method according to claim 12, **characterized in that** the supporting disc device (14) is lifted with a height-adjustable tray reception mold (13) that comes into contact with the supporting disc device (14) from the first position (L1) into the second position (L2).

## Patentansprüche

1. Siegelstation (4) für eine Verpackungsmaschine, wobei die Siegelstation (4) ein Hubwerk (10) und ein Unterwerkzeug (9) umfasst, das durch das Hubwerk (10) zwischen einer offenen Position (P1) und einer geschlossenen Position (P2) angehoben werden kann, wobei das Unterwerkzeug (9) eine Schalenaufnahme (13) und eine Stütztellervorrichtung (14) zum Positionieren von Schalen (3) umfasst, wobei die Stütztellervorrichtung (14) zwischen einer ersten Position (L1), in der die Schalen (3) darauf abgelegt werden, und einer zweiten Position (L2) bewegbar ist, in der die Stütztellervorrichtung (14) für einen Versiegelungsvorgang positioniert ist, wobei sich die Stütztellervorrichtung (14) in der zweiten Position (L2) auf einer höheren Ebene befindet als die Stütztellervorrichtung (14) in der ersten Position (L1), wobei das Hubwerk (10) mindestens eine Federeinheit (21a, 21b) zum Befestigen der Stütztellervorrichtung (14) umfasst,
**dadurch gekennzeichnet, dass**
die Federeinheit (21a, 21b) am Unterwerkzeug (9) in einem unbelasteten Zustand gehalten wird, wenn sich die Stütztellervorrichtung (14) in der ersten Position (L1) befindet, und die Federeinheit (21a, 21b) in einem belasteten Zustand gehalten wird, wenn sich die Stütztellervorrichtung (14) in der zweiten Position (L2) befindet.

2. Siegelstation nach Anspruch 1, **dadurch gekennzeichnet, dass** die Stütztellervorrichtung (14) zusammen mit der Schalenaufnahme (13) in einer gemeinsamen Richtung entlang eines vorbestimmten Abschnitts (T) eines Hubs (H) anhebbar ist.

3. Siegelstation nach Anspruch 1 oder Anspruch 2, **dadurch gekennzeichnet, dass** die Stütztellervorrichtung (14) zumindest teilweise in einem durch die Schalenaufnahme (13) gebildeten Fassungsvermögen (V) untergebracht ist, wobei das Fassungsvermögen (V) eine Fassungshöhe (h) umfasst, die kleiner ist als ein Gesamt-Hub (H) des Unterwerkzeugs (9) durch eine Bewegung zwischen der offenen Position (P1) und der geschlossenen Position (P2).

4. Siegelstation nach einem der vorstehenden Ansprüche, **dadurch gekennzeichnet, dass** die Federeinheit (21a, 21b) mindestens eine Feder (24) mit einem Federhub von etwa 50 Millimeter bis 70 Millimeter.

5. Siegelstation nach einem der vorstehenden Ansprüche, **dadurch gekennzeichnet, dass** in der geschlossenen Position (P2) des Unterwerkzeugs (9) die Federeinheit (21a, 21b) so konfiguriert ist, dass sie die Stütztellervorrichtung (14) mit einer maximalen Federkraft gegen einen Boden (22) der Schalenaufnahme (13) drückt.

6. Siegelstation nach einem der vorstehenden Ansprüche, **dadurch gekennzeichnet, dass** die Hubwerk (10) eine stationäre Basis (16) und eine daran angebrachte Antriebseinheit (15) für das Unterwerkzeug (9) umfasst, wobei die in der zweiten Position (L2) befindliche Stütztellervorrichtung (14) im Vergleich zur in der ersten Position (L1) befindlichen Stütztellervorrichtung (14) weiter von der stationären Basis (16) entfernt ist.

7. Versiegelungsstation nach Anspruch 6, **dadurch gekennzeichnet, dass** die Antriebseinheit (15) zum Bewegen der Schalenaufnahme (13) und der Tragtellervorrichtung (14) verwendet wird.

8. Versiegelungsstation nach einem der vorhergehenden Ansprüche, **dadurch gekennzeichnet, dass** das Hubwerk (10) einen Hebemechanismus mit mindestens zwei vertikal verschiebbaren Hubwellen (20a, 20b) umfasst.

9. Siegelstation nach Anspruch 8, **dadurch gekennzeichnet, dass** die Hubwellen (20a, 20b) mit ihren unteren Enden auf einem höhenverstellbaren Querträger (19) gelagert sind.

10. Siegelstation nach Anspruch 8 oder Anspruch 9, **dadurch gekennzeichnet, dass** die Stützscheibenvorrichtung (14) mindestens zwei Führungswellen (23a, 23b) umfasst, die, in einer vertikalen Projektionsebene gesehen, zwischen den Hubwellen (20a, 20b) angebracht sind.

11. Siegelstation nach Anspruch 10, **dadurch gekennzeichnet, dass** die Führungswellen (23a, 23b) mit ihren unteren Enden an einer den unteren Enden zugewandten Seite des Querträgers (19) andocken können.

12. Verfahren zum Bewegen eines Unterwerkzeugs (9) einer Siegelstation (4) zwischen einer offenen Position (P1) und einer geschlossenen Position (P2), wobei in der offenen Position (P1) des Unterwerkzeugs (9) Schalen (3) auf einer Stütztellervorrichtung (14) des Unterwerkzeugs (9) abgesetzt werden und wobei in der geschlossenen Position (P2) des Unterwerkzeugs (9) die Schalen (3) versiegelt werden, wobei die Stütztellervorrichtung (14) für einen Siegelvorgang aus einer ersten Position (L1), in der die Schalen (3) auf der Stütztellervorrichtung (14) positioniert sind, in eine zweite, gegenüber der ersten Position (L1) höher gelegene Position (L2) bewegt wird, **dadurch gekennzeichnet, dass** die Stütztellervorrichtung (14) gegen eine Federkraft einer Federeinheit (21a, 21b) aus der ersten Position (L1) in die zweite Position (L2) bewegt wird.

13. Verfahren nach Anspruch 12, **dadurch gekennzeichnet, dass** die Stütztellervorrichtung (14) mit einer höhenverstellbaren Schalenaufnahme (13), die mit der Stütztellervorrichtung (14) in Kontakt kommt, von der ersten Position (L1) in die zweite Position (L2) angehoben wird.

## Revendications

1. Station de scellage (4) pour une machine d'emballage, dans laquelle la station de scellage (4) comprend un système de levage (10) et un outil inférieur (9) qui peut être soulevé par le système de levage (10) entre une position ouverte (P1) et une position fermée (P2), l'outil inférieur (9) comprenant un moule de réception de plateaux (13) et un dispositif à disque de support (14) pour positionner les plateaux (3), dans laquelle le dispositif à disque de support (14) peut être déplacé entre une première position (L1) dans laquelle les plateaux (3) sont placés dessus, et une seconde position (L2) dans laquelle le dispositif à disque de support (14) est positionné pour un processus de scellage, dans laquelle, lorsqu'il se trouve dans la seconde position (L2), le dispositif à disque de support (14) est situé à un niveau plus élevé par rapport au dispositif à disque de support (14) qui est situé dans la première position (L1), dans laquelle le système de levage (10) comprend au moins une unité à ressort (21a, 21b) pour monter le dispositif à disque de support (14),
**caractérisée en ce que**
l'unité à ressort (21a, 21b) est maintenue au niveau de l'outil inférieur (9) dans un état non chargé lorsque le dispositif à disque de support (14) se trouve dans la première position (L1) et l'unité à ressort (21a, 21b) est maintenue dans un état chargé lorsque le dispositif à disque de support (14) se trouve dans la seconde position (L2), respectivement.

2. Station de scellage selon la revendication 1, **caractérisée en ce que** le dispositif à disque de support (14) peut être soulevé conjointement avec le moule de réception de plateaux (13) dans une direction commune le long d'une section prédéterminée (T) d'une course de levage (H).

3. Station de scellage selon la revendication 1 ou la revendication 2, **caractérisée en ce que** le dispositif à disque de support (14) est au moins partiellement logé dans un volume de capacité (V) formé par le moule de réception de plateaux (13), ledit volume de capacité (V) comprend une hauteur de capacité (h) qui est inférieure à une course de levage totale (H) de l'outil inférieur (9) en se déplaçant entre la position ouverte (P1) et la position fermée (P2).

4. Station de scellage selon l'une des revendications précédentes, **caractérisée en ce que** l'unité à ressort (21a, 21b) comprend au moins un ressort (24) avec une course de ressort d'environ 50 millimètres à 70 millimètres.

5. Station de scellage selon l'une des revendications précédentes, **caractérisée en ce que,** dans la position fermée (P2) de l'outil inférieur (9), l'unité à ressort (21a, 21b) est configurée pour presser le dispositif à disque de support (14) avec une force de ressort maximale contre un fond (22) du moule de réception de plateaux (13).

6. Station de scellage selon l'une des revendications précédentes, **caractérisée en ce que** le système de levage (10) comprend une base fixe (16) et une unité d'entraînement (15) montée sur celle-ci pour l'outil inférieur (9), dans laquelle le dispositif à disque de support (14) situé dans la seconde position (L2) est plus éloigné de la base fixe (16) que le dispositif à disque de support (14) situé dans la première position (L1).

7. Station de scellage selon la revendication 6, **caractérisée en ce que** l'unité d'entraînement (15) est utilisée pour déplacer le moule de réception de plateaux (13) et le dispositif à disque de support (14).

8. Station de scellage selon l'une des revendications précédentes, **caractérisée en ce que** le système de levage (10) comprend un mécanisme de levage avec au moins deux arbres de levage (20a, 20b) pouvant coulisser verticalement.

9. Station de scellage selon la revendication 8, **caractérisée en ce que** les arbres de levage (20a, 20b) sont montés avec leurs extrémités inférieures sur une traverse réglable en hauteur (19).

10. Station de scellage selon la revendication 8 ou la revendication 9, **caractérisée en ce que** le dispositif à disque de support (14) comprend au moins deux arbres de guidage (23a, 23b) qui, en regardant dans un plan de projection vertical, sont montés entre les arbres de levage (20a, 20b).

11. Station de scellage selon la revendication 10, **caractérisée en ce que** les arbres de guidage (23a, 23b) peuvent venir en appui, avec leurs extrémités inférieures, sur un côté de la traverse (19) faisant face aux extrémités inférieures.

12. Procédé pour déplacer un outil inférieur (9) d'une station de scellage (4) entre une position ouverte (P1) et une position fermée (P2), dans lequel, dans la position ouverte (P1) de l'outil inférieur (9), des plateaux (3) sont placés sur un dispositif à disque de support (14) de l'outil inférieur (9) et dans lequel, dans la position fermée (P2) de l'outil inférieur (9), les plateaux (3) sont scellés, dans lequel le dispositif à disque de support (14) est déplacé pour un processus de scellage d'une première position (L1) dans laquelle les plateaux (3) sont positionnés sur le dispositif à disque de support (14) vers une seconde position (L2) plus élevée par rapport à la première position (L1), **caractérisé en ce que** le dispositif à disque de support (14) est déplacé contre la force de ressort d'une unité à ressort (21a, 21b) de la première position (L1) vers la seconde position (L2).

13. Procédé selon la revendication 12, **caractérisé en ce que** le dispositif à disque de support (14) est soulevé avec un moule de réception de plateaux (13) réglable en hauteur qui entre en contact avec le dispositif à disque de support (14) depuis la première position (L1) vers la seconde position (L2).
